# EUROPÄISCHE PATENTSCHRIFT

(11) **EP 2 769 179 B1**
(45) Veröffentlichungstag und Bekanntmachung des Hinweises auf die Patenterteilung: **01.02.2017**
(21) Anmeldenummer: 12778054.2
(22) Anmeldetag: 27.09.2012
(51) Int. Cl.: G01B 11/26

(54) **SYSTEM UND VERFAHREN ZUR ACHSVERMESSUNG EINES KRAFTFAHRZEUGS**
SYSTEM AND METHOD FOR MEASURING AXES OF A VEHICLE
SYSTÈME ET MÉTHODE DE MESURE D'AXES D'UN VÉHICULE

(30) Priorität: 20.10.2011 DE 102011084876
(43) Veröffentlichungstag der Anmeldung: 27.08.2014
(73) Patentinhaber: Robert Bosch GmbH, 70442 Stuttgart (DE)
(72) Erfinder: WESTPHAL, Stephen, 80997 München (DE); HUMMEL, Klaus, 73230 Kirchheim (DE)
(86) Internationale Anmeldenummer: PCT/EP2012/069024
(87) Internationale Veröffentlichungsnummer: WO 2013/056962

(56) Entgegenhaltungen:
- EP-A1- 1 672 348
- EP-A1- 2 246 686
- DE-A1- 10 236 620
- DE-A1-102009 009 887

## Beschreibung

Die Erfindung betrifft ein System und ein Verfahren zur Achsvermessung eines Kraftfahrzeugs, insbesondere eines Kraftfahrzeugs mit elektronischer Bremsansteuerung.

### Stand der Technik

Zur Achsvermessung und/oder Lenkwinkelkalibrierung von Kraftfahrzeugen auf einem Achsmessstand ist es notwendig, das Kraftfahrzeug festzubremsen, um ein ungewolltes Wegrollen zu vermeiden sowie die Mess- und Prüfprozeduren korrekt durchführen zu können (siehe z.B. US 5, 797, 190 A). Das Festbremsen, das heißt, das Absichern des Kraftfahrzeugs gegenüber rollenden Bewegungen einzelner oder aller Räder, kann beispielsweise manuell durchgeführt werden, indem das Bremspedal des Kraftfahrzeugs mit einem Pedalspanner (siehe z.B. JP 2001-278016 A) in aktivierter Stellung gehalten wird.

Die Druckschrift DE 201 05 929 U1 offenbart einen Fahrwerksmessstand für Kraftfahrzeuge mit Radaufnahmen, in denen die Räder des Kraftfahrzeugs positioniert und gegen ein Wegrollen abgesichert werden können.

Die Druckschrift 10 2004 001 439 A1 offenbart einen Prüfstand für Kraftfahrzeuge, bei dem eine Lauffläche einer Radabrolleinrichtung blockierbar bzw. feststellbar ist, um bei einer Drehung der Radabrolleinrichtung eine Achsvermessung vornehmen zu können.

Es besteht daher ein Bedarf an Systemen und Verfahren zur Achsvermessung an Kraftfahrzeugen, welche einfacher, schneller und sicherer durchzuführen sind.

### Offenbarung der Erfindung

Die vorliegende Erfindung schafft gemäß einem Aspekt ein Verfahren zur Achsvermessung eines Kraftfahrzeugs, mit den Schritten des Initiieren eines ersten Achsvermessungsvorgangs durch ein erstes Auswahlsignal, des Ausgebens eines ersten Steuersignals an ein elektronisches Bremsregelsystem des Kraftfahrzeugs in Abhängigkeit von dem ersten Auswahlsignal, des Aktivierens einer ersten Bremskonfiguration elektronisch betätigbarer Bremsen des Kraftfahrzeugs durch das elektronische Bremsregelsystem in Abhängigkeit von dem ersten Steuersignal, und des Durchführens des ersten Achsvermessungsvorgangs, während die erste Bremskonfiguration aktiviert ist.

Gemäß einem weiteren Aspekt schafft die vorliegende Erfindung ein Computerprogrammprodukt, welches maschinenlesbare Anweisungen umfasst, die dazu ausgelegt sind, ein erfindungsgemäßes Verfahren auf einer Rechenanlage durchzuführen.

Gemäß einem weiteren Aspekt schafft die vorliegende Erfindung ein System zur Unterstützung der Achsvermessung eines Kraftfahrzeugs, mit einer Schnittstelle, welche mit einem elektronischen Bremsregelsystem des Kraftfahrzeugs koppelbar ist, und welche dazu ausgelegt ist, Steuersignale zum Aktivieren von Bremskonfigurationen elektronisch betätigbarer Bremsen des Kraftfahrzeugs an das elektronische Bremsregelsystem zu übermitteln, und einer digitalen Signalverarbeitungseinrichtung, welche mit der Schnittstelle gekoppelt ist, und welche dazu ausgelegt ist, ein Auswahlsignal zum Initiieren eines Achsvermessungsvorgangs entgegenzunehmen, und in Abhängigkeit von dem Auswahlsignal ein Steuersignal über die Schnittstelle an das elektronische Bremsregelsystem weiterzuleiten, wobei das Steuersignal eine Aktivierung einer Bremskonfiguration elektronisch betätigbarer Bremsen des Kraftfahrzeugs durch das elektronische Bremsregelsystem indiziert.

Gemäß einem weiteren Aspekt schafft die vorliegende Erfindung einen Achsmessstand für ein Kraftfahrzeug, mit einem erfindungsgemäßen System.

### Vorteile der Erfindung

Eine Idee der vorliegenden Erfindung ist es, Funktionen von elektronischen Bremsregelsystemen des Kraftfahrzeugs bei der Durchführung einer Achsvermessung aufzurufen, um das Kraftfahrzeug während der Messung automatisch festzubremsen.

Durch das programmgesteuerte, automatische Festbremsen reduziert sich der Vorbereitungsaufwand für die Achsvermessung und/oder Lenkwinkelsensorkalibrierung erheblich, da ein manuelles Festbremsen nicht mehr notwendig ist.

Gemäß einer Ausführungsform kann das Verfahren weiterhin die Schritte des Initiieren eines zweiten Achsvermessungsvorgangs durch ein zweites Auswahlsignal, des Ausgebens eines zweiten Steuersignals an das elektronisches Bremsregelsystem des Kraftfahrzeugs in Abhängigkeit von dem zweiten Auswahlsignal, des Umstellens der ersten Bremskonfiguration in eine zweite, von der ersten Bremskonfiguration verschiedene Bremskonfiguration durch das elektronische Bremsregelsystem in Abhängigkeit von dem zweiten Steuersignal, und des Durchführens des zweiten Achsvermessungsvorgangs, während die zweite Bremskonfiguration aktiviert ist, umfassen. Damit können vorteilhafterweise verschiedene Achsvermessungen in Reihe vorgenommen werden, welche unterschiedliche Anforderungen an die Beweglichkeit der einzelnen Räder des Kraftfahrzeugs aufweisen.

Gemäß einer weiteren Ausführungsform kann die erste und/oder zweite Bremskonfiguration jeweils ein Festbremsen der Vorderräder des Kraftfahrzeugs, ein Festbremsen der Hinterräder des Kraftfahrzeugs und ein alternierendes Festbremsen je eines Vorderrades und eines diagonal entgegengesetzten Hinterrades des Kraftfahrzeugs umfassen. Damit kann zum Einen ein unerwünschtes Wegrollen des Kraftfahrzeugs verhindert werden, zum Anderen spezielle Achsmessprozeduren wie beispielsweise eine Lenkeinschlagroutine durchgeführt werden.

Gemäß einer weiteren Ausführungsform können die elektronisch betätigbaren Bremsen Radbremsen und/oder eine elektromechanische Feststellbremse umfassen. Dadurch können verschiedene Bremskonfigurationen realisiert werden, die sich der jeweiligen Achsvermessungssituation flexibel anpassen lassen.

Gemäß einer weiteren Ausführungsform kann das Verfahren weiterhin die Schritte des Erfassens der Zeitdauer nach dem Aktivieren einer aktuellen Bremskonfiguration, während der die aktuelle Bremskonfiguration aktiv ist, des Ausgebens der aktuellen Zeitdauer an einen Nutzer, welcher die Achsvermessung an dem Kraftfahrzeug vornimmt, und des automatischen Deaktivierens der aktuellen Bremskonfiguration, wenn eine vorbestimmte Zeitdauer überschritten ist, umfassen. Dadurch kann eine Überlastung der elektronischen Bremsen verhindert werden, beispielsweise wenn die Vorderräder permanent blockiert werden.

Gemäß einer weiteren Ausführungsform kann der erste und/oder zweite Achsvermessungsvorgang eine Spurvermessung, eine Achssturzvermessung, eine Radversatzmessung, eine Nachlaufvermessung, eine Spreizungsvermessung, eine Spurdifferenzwinkelvermessung, eine Fahrachswinkelvermessung, eine Radstandsdifferenzvermessung, eine Achsversatzvermessung, eine Lenkwinkelsensorkalibrierung und/oder eine Spurweitendifferenzvermessung umfassen. Dies bietet den Vorteil, dass eine vollständige Erfassung von Sollwerten der Achsvermessung unter Zuhilfenahme des elektronischen Bremsregelsystems möglich ist.

Gemäß einer weiteren Ausführungsform kann das elektronische Bremsregelsystem ein Fahrdynamikregelungssystem des Kraftfahrzeugs sein. Insbesondere Kraftfahrzeuge mit elektronischer Stabilitätskontrolle lassen sich vorteilhafterweise mit dem Verfahren vermessen, da sich deren Radbremsen über externe Steuersignale gezielt und selektiv ansteuern lassen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

Es zeigen:
- Fig. 1: eine schematische Darstellung eines Verfahrens zur Achsvermessung eines Kraftfahrzeugs gemäß einer Ausführungsform der Erfindung; und
- Fig. 2: eine schematische Darstellung eines Achsmessstandes zur Achsvermessung eines Kraftfahrzeugs gemäß einer weiteren Ausführungsform der Erfindung.

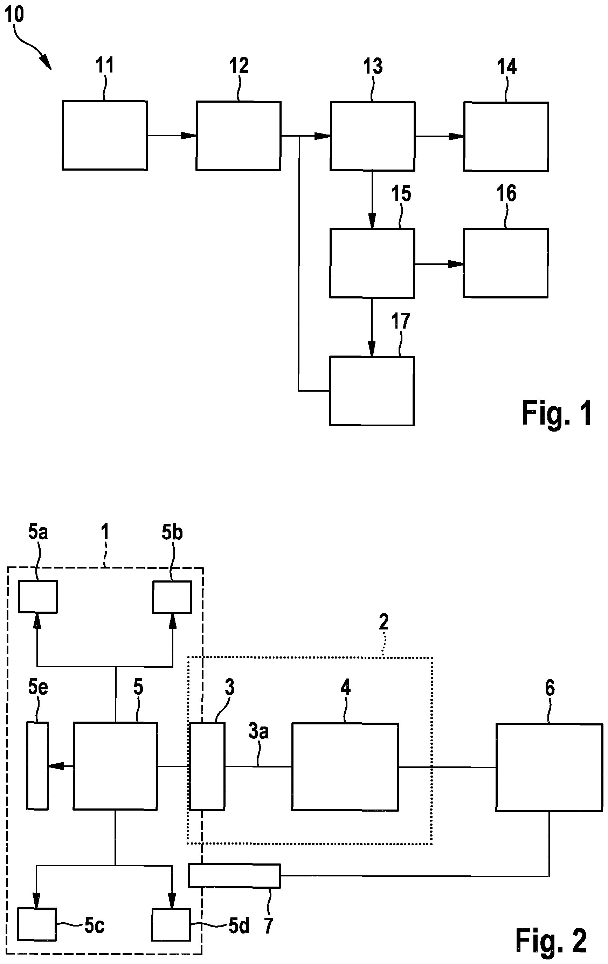

Fig. 1 zeigt eine schematische Darstellung eines Verfahrens 10 zur Achsvermessung eines Kraftfahrzeugs. Kraftfahrzeuge im Sinne der vorliegenden Erfindung können dabei insbesondere Landfahrzeuge mit einer oder mehreren Radachsen aufweisen, wobei an jeder der Radachsen zwei oder mehr Räder montiert sind. Kraftfahrzeuge können dabei beispielsweise Personenkraftwagen, Lastkraftwagen oder sonstige Automobile umfassen.

Das Verfahren 10 zur Achsvermessung eines Kraftfahrzeugs kann dabei für eine Vielzahl von Achsvermessungsvorgängen eingesetzt werden, beispielsweise eine Spurvermessung, eine Achssturzvermessung, eine Radversatzmessung, eine Nachlaufvermessung, eine Spreizungsvermessung, eine Spurdifferenzwinkelvermessung, eine Fahrachswinkelvermessung, eine Radstandsdifferenzvermessung, eine Achsversatzvermessung, eine Lenkwinkelsensorkalibrierung, eine Spurweitendifferenzvermessung oder sonstige Achsvermessungsprozesse. Nach einer erfolgten Achsvermessung kann beispielsweise eine Lenkradwinkelsensorkalibrierung des Kraftfahrzeugs vorgenommen werden. Das Verfahren 10 wird im Folgenden anhand der beispielhaften Konfiguration eines Achsmessstandes erläutert, welche in Fig. 2 schematisch dargestellt ist.

Das Verfahren 10 weist in einem ersten Schritt 11 ein Initiieren eines ersten Achsvermessungsvorgangs durch ein erstes Auswahlsignal auf. Dazu kann ein Nutzer, beispielsweise ein Mechaniker oder ein Werkstattbediensteter auf einer Bedienoberfläche einer digitalen Signalverarbeitungseinrichtung 4 eines Achsmessstandes eine Auswahl eines durchzuführenden Achsvermessungsvorgangs treffen, beispielsweise durch Anwählen eines Menüpunkts in einer zugehörigen Achsvermessungssoftware, welche auf der digitalen Signalverarbeitungseinrichtung 4 installiert sein kann. In einem zweiten Schritt 12 kann dann ein Ausgeben eines ersten Steuersignals an ein elektronisches Bremsregelsystem 5 eines Kraftfahrzeugs 1 in Abhängigkeit von dem ersten Auswahlsignal erfolgen. Das erste Auswahlsignal kann beispielsweise über eine Schnittstelle 3 übermittelt werden, welche an das Kraftfahrzeug 1 angeschlossen und mit dem elektronischen Bremsregelsystem 5 gekoppelt werden kann. Die Schnittstelle 3 kann dazu ausgelegt sein, Steuersignale zum Aktivieren von Bremskonfigurationen elektronisch betätigbarer Bremsen 5a, 5b, 5c, 5d, 5e des Kraftfahrzeugs 1 an das elektronische Bremsregelsystem 5 zu übermitteln.

Das elektronische Bremsregelsystem 5 kann beispielsweise ein elektronisches Stabilitätsprogramm, ein Fahrdynamikregelungssystem oder ein sonstiges System aufweisen, mit welchem sich selektiv und extern steuerbar elektronisch betätigbare Bremsen 5a, 5b, 5c, 5d, 5e des Kraftfahrzeugs 1 ansteuern lassen. Die elektronisch betätigbaren Bremsen 5a, 5b, 5c, 5d, 5e des Kraftfahrzeugs 1 können beispielsweise Radbremsen 5a, 5b, 5c, 5d für einzelne Räder des Kraftfahrzeugs 1 und eine elektromechanische Feststellbremse oder Handbremse 5e aufweisen. Die Anzahl der elektronisch betätigbaren Bremsen 5a, 5b, 5c, 5d, 5e des Kraftfahrzeugs 1 ist beispielhaft mit fünf dargestellt, es sollte jedoch klar sein, dass jede andere Anzahl von elektronisch betätigbaren Bremsen ebenso möglich ist.

Das elektronische Bremsregelsystem 5 kann dabei dazu ausgelegt sein, verschiedene Bremskonfigurationen durch Aktivierung verschiedener Kombinationen der elektronisch betätigbaren Bremsen 5a, 5b, 5c, 5d, 5e einzustellen. Beispielsweise können die Bremskonfigurationen jeweils ein Festbremsen der Vorderräder durch Betätigung der Vorderradbremsen 5a, 5b des Kraftfahrzeugs, ein Festbremsen der Hinterräder durch Betätigung der Hinterradbremsen 5c, 5d des Kraftfahrzeugs und ein alternierendes Festbremsen je eines Vorderrades und eines diagonal entgegengesetzten Hinterrades des Kraftfahrzeugs durch Betätigung der jeweils zugeordneten Bremsen 5a, 5b, 5c, 5d umfassen. Beispielsweise kann das alternierende Festbremsen je eines Vorderrades und eines diagonal entgegengesetzten Hinterrades dadurch erreicht werden, dass eine der beiden Vorderradbremsen 5a, 5b und eine der beiden Hinterradbremsen 5c, 5d gleichzeitig für eine vorbestimmte Zeitspanne aktiviert werden. Die vorbestimmte Zeitspanne kann dabei so gewählt werden, dass eine Überlastung der einzelnen Radbremsen verhindert wird. Nach Ablauf der vorbestimmten Zeitspanne können die jeweils nicht aktivierten Vorderradbremsen und Hinterradbremsen aktiviert werden und die aktivierten Bremsen gelöst werden. Dies kann im Wechsel vorgenommen werden, so dass das Kraftfahrzeug 1 stets gegen ein unerwünschtes Wegrollen gesichert ist, gleichzeitig aber eine Überlastung der Bremse 5a, 5b, 5c, 5d vermieden wird.

In einem Schritt 13 kann ein Aktivieren einer ersten Bremskonfiguration der elektronisch betätigbaren Bremsen 5a, 5b, 5c, 5d, 5e des Kraftfahrzeugs 1 durch das elektronische Bremsregelsystem 5 in Abhängigkeit von dem ersten Steuersignal erfolgen. In einem Schritt 14 kann dann der erste Achsvermessungsvorgang durchgeführt werden, während die erste Bremskonfiguration aktiviert ist. Die Achsvermessung kann dabei mit einem Achsvermessungsgerät 6 durchgeführt werden, welches gegebenenfalls mit weiteren Messvorrichtungen 7 wie Kameras, Sensoren oder ähnlichen Einrichtungen verbunden ist. Die Messvorrichtungen 7 dienen dabei zur Erfassung der relevanten Sollwerte des jeweils durchgeführten Achsvermessungsvorgangs.

Das Verfahren 10 kann dabei nach durchgeführtem ersten Achsvermessungsvorgang gegebenenfalls wiederholt werden, indem ein Initiieren eines zweiten Achsvermessungsvorgangs durch ein zweites Auswahlsignal, ein Ausgeben eines zweiten Steuersignals an das elektronisches Bremsregelsystem 5 des Kraftfahrzeugs 1 in Abhängigkeit von dem zweiten Auswahlsignal, und ein Umstellen der ersten Bremskonfiguration in eine zweite, von der ersten Bremskonfiguration verschiedene Bremskonfiguration durch das elektronische Bremsregelsystem 5 in Abhängigkeit von dem zweiten Steuersignal vorgenommen wird. Danach kann ein Durchführen des zweiten Achsvermessungsvorgangs erfolgen, während die zweite Bremskonfiguration aktiviert ist.

Optional kann das Verfahren weiterhin den Schritt 15 des Erfassens der Zeitdauer nach dem Aktivieren einer aktuellen Bremskonfiguration, während der die aktuelle Bremskonfiguration aktiv ist, aufweisen. Die erfasste Zeitdauer kann in einem Schritt 16 einem Nutzer, welcher die Achsvermessung an dem Kraftfahrzeug vornimmt, beispielsweise einem Mechaniker oder einem Werkstattbediensteten, angezeigt werden. Dadurch weiß der Nutzer, wie viel Zeit ihm noch für die Durchführung des aktuellen Achsvermessungsvorgangs bleibt. Wenn eine vorbestimmte Zeitdauer überschritten ist, kann in einem Schritt 17 ein automatisches Deaktivieren der aktuellen Bremskonfiguration erfolgen. Dies kann beispielsweise der Fall sein, wenn beide Vorderradbremsen 5a, 5b aktiviert sind und eine alternierende Ansteuerung von Bremsen nicht möglich ist. Dann ist es mit den Schritten 15, 16 und 17 möglich, einer Überlastung der Bremsen vorzubeugen, indem die gewählte Bremskonfiguration nur für eine maximale Zeitspanne aufrechterhalten wird und die Bremsen danach gelöst werden. Ein gleichzeitiges Festbremsen der beiden Vorderradbremsen 5a, 5b kann beispielsweise bei der Durchführung einer Einschlagroutine oder bei einer Geradeauslaufmessung notwendig sein.

Das Verfahren 10 kann in maschinenlesbarer Form vorliegen, das heißt, ein Computerprogrammprodukt, welches maschinenlesbare Anweisungen umfasst, die dazu ausgelegt sind, das Verfahren 10 auf einer Rechenanlage, beispielsweise der digitalen Signalverarbeitungseinrichtung 4 durchzuführen.

Fig. 2 zeigt die schematische Darstellung eines Systems 2 zur Unterstützung der Achsvermessung eines Kraftfahrzeugs 1. Dabei kann das System 2 insbesondere dazu ausgelegt sein, ein Verfahren zur Achsvermessung eines Kraftfahrzeugs, beispielsweise das Verfahren 10 in Fig. 1 durchzuführen. Das System 2 umfasst eine Schnittstelle 3, welche mit einem elektronischen Bremsregelsystem 5 des Kraftfahrzeugs 1 koppelbar ist, und welche dazu ausgelegt ist, Steuersignale zum Aktivieren von Bremskonfigurationen elektronisch betätigbarer Bremsen 5a, 5b, 5c, 5d, 5e des Kraftfahrzeugs 1 an das elektronische Bremsregelsystem 5 zu übermitteln. Die Schnittstelle 3 kann über eine Datenverbindung 3a mit einer digitalen Signalverarbeitungseinrichtung 4 gekoppelt sein. Die Datenverbindung 3a kann beispielsweise eine drahtgebundene, beispielsweise eine LAN-Verbindung, oder eine drahtlose Kommunikationsverbindung umfassen, beispielsweise eine Infrarotverbindung, eine Bluetoothverbindung, eine Funkverbindung oder eine WLAN-Verbindung. Die digitale Signalverarbeitungseinrichtung 4 kann beispielsweise ein PC, ein Laptop, ein Smartphone, ein Mobiltelefon, ein Werkstattserver oder eine sonstige Rechneranlage aufweisen. Die digitale Signalverarbeitungseinrichtung 4 kann beispielsweise eine Recheneinrichtung sein, welche in den Achsmessstand integriert ist. Auf der digitalen Signalverarbeitungseinrichtung 4 können zum Beispiel verschiedene Programme installiert sein, beispielsweise eine Software des Achsmesstands, eine Ansteuersoftware für Steuerdiagnosegeräte oder ähnliche Software. Die digitale Signalverarbeitungseinrichtung 4 kann dazu ausgelegt sein, Auswahlsignale zum Initiieren von Achsvermessungsvorgängen entgegenzunehmen.

## Patentansprüche

1. Verfahren (10) zur Achsvermessung eines Kraftfahrzeugs (1), mit den Schritten:
Initiieren (11) eines ersten Achsvermessungsvorgangs durch ein erstes Auswahlsignal; Ausgeben (12) eines ersten Steuersignals an ein elektronisches Bremsregelsystem (5) des Kraftfahrzeugs (1) in Abhängigkeit von dem ersten Auswahlsignal;
Aktivieren (13) einer ersten Bremskonfiguration elektronisch betätigbarer Bremsen (5a, 5b, 5c, 5d, 5e) des Kraftfahrzeugs (1) durch das elektronische Bremsregelsystem (5) in Abhängigkeit von dem ersten Steuersignal; und
Durchführen (14) des ersten Achsvermessungsvorgangs, während die erste Bremskonfiguration aktiviert ist,
**dadurch gekennzeichnet, dass** die erste Bremskonfiguration jeweils ein Festbremsen der Vorderräder des Kraftfahrzeugs (1), ein Festbremsen der Hinterräder des Kraftfahrzeugs (1) und ein alternierendes Festbremsen je eines Vorderrades und eines diagonal entgegengesetzten Hinterrades des Kraftfahrzeugs (1) umfasst.

2. Verfahren (10) nach Anspruch 1, weiterhin mit den Schritten:
Initiieren eines zweiten Achsvermessungsvorgangs durch ein zweites Auswahlsignal; Ausgeben eines zweiten Steuersignals an das elektronisches Bremsregelsystem (5) des Kraftfahrzeugs (1) in Abhängigkeit von dem zweiten Auswahlsignal;
Umstellen der ersten Bremskonfiguration in eine zweite, von der ersten Bremskonfiguration verschiedene Bremskonfiguration durch das elektronische Bremsregelsystem in Abhängigkeit von dem zweiten Steuersignal; und
Durchführen des zweiten Achsvermessungsvorgangs, während die zweite Bremskonfiguration aktiviert ist.

3. Verfahren (10) nach Anspruch 2, wobei die zweite Bremskonfiguration jeweils ein Festbremsen der Vorderräder des Kraftfahrzeugs (1), ein Festbremsen der Hinterräder des Kraftfahrzeugs (1) und ein alternierendes Festbremsen je eines Vorderrades und eines diagonal entgegengesetzten Hinterrades des Kraftfahrzeugs (1) umfasst.

4. Verfahren (10) nach einem der Ansprüche 1 bis 3, wobei die elektronisch betätigbaren Bremsen (5a, 5b, 5c, 5d, 5e) Radbremsen (5a, 5b, 5c, 5d) und/oder eine elektromechanische Feststellbremse (5e) umfassen.

5. Verfahren (10) nach einem der Ansprüche 1 bis 4, weiterhin mit den Schritten:
Erfassen (15) der Zeitdauer nach dem Aktivieren einer aktuellen Bremskonfiguration, während der die aktuelle Bremskonfiguration aktiv ist;
Ausgeben (16) der aktuellen Zeitdauer an einen Nutzer, welcher die Achsvermessung an dem Kraftfahrzeug (1) vornimmt; und
automatisches Deaktivieren (17) der aktuellen Bremskonfiguration, wenn eine vorbestimmte Zeitdauer überschritten ist.

6. Verfahren (10) nach einem der Ansprüche 1 bis 5, wobei der erste und/oder zweite Achsvermessungsvorgang eine Spurvermessung, eine Achssturzvermessung, eine Radversatzmessung, eine Nachlaufvermessung, eine Spreizungsvermessung, eine Spurdifferenzwinkelvermessung, eine Fahrachswinkelvermessung, eine Radstandsdifferenzvermessung, eine Achsversatzvermessung, eine Lenkwinkelsensorkalibrierung und/oder eine Spurweitendifferenzvermessung umfassen.

7. Verfahren (10) nach einem der Ansprüche 1 bis 6, wobei das elektronische Bremsregelsystem (5) ein Fahrdynamikregelungssystem des Kraftfahrzeugs (1) ist.

8. Computerprogrammprodukt, welches maschinenlesbare Anweisungen umfasst, die dazu ausgelegt sind, ein Verfahren nach einem der Ansprüche 1 bis 7 auf einer Rechenanlage durchzuführen.

9. System (2) zur Unterstützung der Achsvermessung eines Kraftfahrzeugs, mit:
einer Schnittstelle (3), welche mit einem elektronischen Bremsregelsystem (5) des Kraftfahrzeugs (1) koppelbar ist, und welche dazu ausgelegt ist, Steuersignale zum Aktivieren von Bremskonfigurationen elektronisch betätigbarer Bremsen (5a, 5b, 5c, 5d, 5e) des Kraftfahrzeugs (1) an das elektronische Bremsregelsystem (5) zu übermitteln; und
einer digitalen Signalverarbeitungseinrichtung (4), welche mit der Schnittstelle (3) gekoppelt ist, und welche dazu ausgelegt ist, ein Auswahlsignal zum Initiieren eines Achsvermessungsvorgangs entgegenzunehmen, und in Abhängigkeit von dem Auswahlsignal ein Steuersignal über die Schnittstelle (3) an das elektronische Bremsregelsystem (5) weiterzuleiten, wobei das Steuersignal eine Aktivierung einer Bremskonfiguration elektronisch betätigbarer Bremsen (5a, 5b, 5c, 5d, 5e) des Kraftfahrzeugs (1) durch das elektronische Bremsregelsystem (5) induziert,
wobei die erste Bremskonfiguration jeweils ein Festbremsen der Vorderräder des Kraftfahrzeugs (1), ein Festbremsen der Hinterräder des Kraftfahrzeugs (1) und ein alternierendes Festbremsen je eines Vorderrades und eines diagonal entgegengesetzten Hinterrades des Kraftfahrzeugs (1) umfasst.

10. Achsmessstand für ein Kraftfahrzeug (1), mit einem System (2) nach Anspruch 9.

## Claims

1. Method (10) for aligning the wheels of a motor vehicle (1), comprising the steps:
initiating (11) a first wheel alignment process by means of a first selection signal;
outputting (12) a first control signal to an electronic brake control system (5) of the motor vehicle (1) as a function of the first selection signal;
activating (13) a first brake configuration of electronically actuable brakes (5a, 5b, 5c, 5d, 5e) of the motor vehicle (1) by means of the electronic brake control system (5) as a function of the first control signal; and
carrying out (14) the first wheel alignment process while the first brake configuration is activated,
**characterized in that** the first brake configuration respectively comprises full application of the brakes on the front wheels of the motor vehicle (1), full application of the brakes on the rear wheels of the motor vehicle (1) and alternating full application of the brakes on, in each case, a front wheel an a diagonally opposite rear wheel of the motor vehicle (1).

2. Method (10) according to Claim 1, also comprising the steps:
initiating a second wheel alignment process by means of a second selection signal;
outputting a second control signal to the electronic brake control system (5) of the motor vehicle (1) as a function of the second selection signal;
inverting the first brake configuration into a second brake configuration, different from the first brake configuration, by means of the electronic brake control system as a function of the second control signal; and
carrying out the second wheel alignment process while the second brake configuration is activated.

3. Method (10) according to Claim 2, wherein the second brake configuration comprises in each case full application of the brakes on the front wheels of the motor vehicle (1), full application of the brakes on the rear wheels of the motor vehicle (1), and alternating full application of the brakes on, in each case, a front wheel and a diagonally opposite rear wheel of the motor vehicle (1).

4. Method (10) according to one of Claims 1 to 3, wherein the electronically actuable brakes (5a, 5b, 5c, 5d, 5e) comprise wheel brakes (5a, 5b, 5c, 5d) and/or an electromechanical parking brake (5e).

5. Method (10) according to one of Claims 1 to 4, also comprising the steps:
detecting (15) the time period after the activation of a current brake configuration,
during which period the current brake configuration is active;
outputting (16) the current time period to a user which performs the wheel alignment on the motor vehicle (1); and
automatic deactivation (17) of the current brake configuration if a predetermined time period is exceeded.

6. Method (10) according to one of Claims 1 to 5, wherein the first and/or second wheel alignment processes/process comprise toe-in measurement, camber measurement, wheel offset measurement, castor measurement, king pin inclination measurement, toe-out angle measurement, driving axis angle measurement, wheel base difference measurement, axle offset measurement, steering angle sensor calibration and/or track width difference measurement.

7. Method (10) according to one of Claims 1 to 6, wherein the electronic brake control system (5) is a traction control system of the motor vehicle (1).

8. Computer program product which comprises machine-readable instructions which are configured to carry out a method according to one of Claims 1 to 7 on a computing system.

9. System (2) for assisting the wheel alignment of a motor vehicle, having an interface (3) which can be coupled to an electronic brake control system (5) of the motor vehicle (1) and which is configured to transmit control signals for the activation of brake configurations of electronically actuable brakes (5a, 5b, 5c, 5d, 5e) of the motor vehicle (1) to the electronic brake control system (5); and
a digital signal-processing device (4) which is coupled to the interface (3) and which is configured to receive a selection signal for the initiation of a wheel alignment process and to pass on a control signal to the electronic brake control system (5) via the interface (3) as a function of the selection signal, wherein the control signal indicates activation of a brake configuration of electronically actuable brakes (5a, 5b, 5c, 5d, 5e) of the motor vehicle (1) by means of the electronic brake control system (5), wherein the first brake configuration comprises in each case full application of the brakes on the front wheels of the motor vehicle (1), full application of the brakes on the rear wheels of the motor vehicle (1) and alternating full application of the brakes of, in each case, a front wheel and of a diagonally opposite rear wheel of the motor vehicle (1).

10. Wheel alignment system for a motor vehicle (1), having a system (2) according to Claim 9.

## Revendications

1. Procédé (10) de mesure de la géométrie d'un véhicule automobile (1), comprenant les étapes consistant à :
déclencher (11) un premier processus de mesure de géométrie au moyen d'un premier signal de sélection ;
délivrer (12) un premier signal de commande à un système de régulation électronique de freinage (5) du véhicule automobile (1) en fonction du premier signal de sélection ;
activer (13) une première configuration de freinage de freins (5a, 5b, 5c, 5d, 5e) du véhicule automobile (1) pouvant être actionnés électroniquement, au moyen du système de régulation électronique de freinage (5) en fonction du premier signal de commande ; et
exécuter (14) le premier processus de mesure de géométrie pendant que la première configuration de freinage est activée,
**caractérisé en ce que** la première configuration de freinage comprend respectivement un freinage bloquant les roues avant du véhicule automobile (1), un freinage bloquant les roues arrière du véhicule automobile (1) et un freinage bloquant alternativement respectivement une roue avant et une roue arrière diagonalement opposées du véhicule automobile (1).

2. Procédé (10) selon la revendication 1, comprenant en outre les étapes consistant à :
déclencher un second processus de mesure de géométrie au moyen d'un second signal de sélection ;
délivrer un second signal de commande au système de régulation électronique de freinage (5) du véhicule automobile (1) en fonction du second signal de sélection ;
basculer de la première configuration de freinage à une seconde configuration de freinage différente de la première configuration de freinage au moyen du système électronique de freinage en fonction du second signal de commande ; et
exécuter le second processus de mesure de géométrie pendant que la seconde configuration de freinage est activée.

3. Procédé (10) selon la revendication 2, dans lequel la seconde configuration de freinage comprend respectivement un freinage bloquant les roues avant du véhicule automobile (1), un freinage bloquant les roues arrière du véhicule automobile (1) et un freinage bloquant alternativement respectivement une roue avant et une roue arrière diagonalement opposée du véhicule automobile (1).

4. Procédé (10) selon l'une quelconque des revendications 1 à 3, dans lequel les freins pouvant être actionnés électroniquement (5a, 5b, 5c, 5d, 5e) comprennent des freins de roues (5a, 5b, 5c, 5d) et/ou un frein de stationnement électromécanique (5e).

5. Procédé (10) selon l'une quelconque des revendications 1 à 4, comprenant en outre les étapes consistant à :
détecter (15) l'intervalle de temps, faisant suite à l'activation d'une configuration de freinage effective, pendant laquelle la configuration de freinage effective est active ;
délivrer (16) l'intervalle de temps effectif à un utilisateur qui réalise la mesure de géométrie sur le véhicule automobile (1) ; et
désactiver automatiquement (17) la configuration de freinage effective lorsqu'un intervalle de temps prédéterminé est dépassé.

6. Procédé (10) selon l'une quelconque des revendications 1 à 5, dans lequel le premier et/ou le second processus de mesure de géométrie comprend/comprennent une mesure de parallélisme, une mesure de cambrure de l'essieu, une mesure de décalage des roues, une mesure de chasse, une mesure d'écartement, une mesure de l'angle différentiel de voie, une mesure de l'angle de l'essieu, une mesure de différence d'empattement, une mesure du décalage de l'essieu, un étalonnage du capteur d'angle de braquage et/ou une mesure de différence de largeur de voie.

7. Procédé (10) selon l'une quelconque des revendications 1 à 6, dans lequel le système électronique de freinage (5) est un système de commande électronique de stabilité du véhicule automobile (1).

8. Produit de programme informatique comprenant des instructions lisibles par machine, qui sont conçues pour mettre en oeuvre un procédé selon l'une quelconque des revendications 1 à 7 sur un système calculateur.

9. Système (2) destiné à prendre en charge la mesure de géométrie d'un véhicule automobile, comprenant :
une interface (3) pouvant être couplée à un système électronique de freinage (5) du véhicule automobile (1) et conçue pour transmettre au système électronique de freinage (5) des signaux de commande destinés à activer des configurations de freinage de freins (5a, 5b, 5c, 5d, 5e) pouvant être actionnés électroniquement du véhicule automobile (1) ; et
un dispositif de traitement numérique du signal (4) qui est couplé à l'interface (3) et qui est conçu pour accepter un signal de sélection destiné à déclencher un processus de mesure de géométrie et à transférer un signal de commande par l'intermédiaire de l'interface (3) au système électronique de freinage (5) en fonction du signal de sélection, dans lequel le signal de commande indique une activation d'une configuration de freinage de freins (5a, 5b, 5c, 5d, 5e) pouvant être actionnés électroniquement du véhicule automobile (1) par l'intermédiaire du système électronique de freinage (5), dans lequel la configuration de freinage comprend respectivement un freinage bloquant les roues avant du véhicule automobile (1), un freinage bloquant les roues arrière du véhicule automobile (1) et un freinage bloquant alternativement respectivement une roue avant et une roue arrière diagonalement opposée du véhicule automobile (1).

10. Banc de mesure de géométrie destiné à un véhicule automobile (1), comportant un système (2) selon la revendication 9.
